# EUROPÄISCHE PATENTSCHRIFT

(11) **EP 0 893 460 B1**
(45) Veröffentlichungstag und Bekanntmachung des Hinweises auf die Patenterteilung: **06.06.2001**
(21) Anmeldenummer: 98112966.1
(22) Anmeldetag: 13.07.1998
(51) Int. Cl.: C08G 18/78, C08G 18/08, C08G 18/70, C09D 175/06

(54) **Wässrige Polyurethan-Dispersionen auf Basis Allophat-modifizierter Polyisocyanate**
Aqueous polyurethane dispersions based on allophanate modified polyisocyanates
Dispersions aqueuses de polyurethane à base de polyisocyanates modifiés par des groupes allophanate

(30) Priorität: 24.07.1997 DE 19731864
(43) Veröffentlichungstag der Anmeldung: 27.01.1999
(73) Patentinhaber: BAYER AG, 51368 Leverkusen (DE)
(72) Erfinder: Pedain, Josef Dr., 51061 Köln (DE); Arning, Eberhard, 41564 Kaarst (DE); Mager, Dieter, 51377 Leverkusen (DE); Schmalstieg, Lutz Dr., 50676 Köln (DE); Jerg, Ronald-Karl Dr., 50937 Köln (DE)

(56) Entgegenhaltungen:
- EP-A- 0 566 037
- EP-A- 0 641 812
- US-A- 5 380 792
- DATABASE WPI Section Ch, Week 9250 Derwent Publications Ltd., London, GB; Class A25, AN 92-410414 XP002079920 & JP 04 306218 A (ASAHI CHEM IND CO LTD) , 29. Oktober 1992

## Beschreibung

Die Erfindung betrifft wäßrige PUR-Dispersionen mit verbesserten Eigenschaften und deren Verwendung.

Wäßrige Dispersionen von Polyurethanen oder Polyurethanharnstoffen, die man vereinfachend als PUR-Dispersionen bezeichnet, sind seit langem bekannt (vgl. z.B. Angewandte Chemie, 82, (1970) Seiten 53 bis 63) und besitzen ein hohes Qualitätsniveau.

Sie werden in großem Maßstab für Lacke und Beschichtungen genutzt und erfüllen für viele Verwendungen hohe Anforderungen.

Dennoch gibt es Anwendungsbeispiele, bei denen die aus PUR-Dispersionen hergestellten Lacke und Beschichtungen nicht den Anforderungen gerecht werden. Genannt sei zum Beispiel die Lackierung von Holzteilen und Parkettböden mit wäßrigen PUR-Dispersionen. Es werden sehr hohe Anforderungen an die Oberflächenhärte, die Wasserbeständigkeit und die Beständigkeit gegen Gemische aus Wasser und Ethanol gestellt, wobei besonders erschwerend die Aushärtung d.h. die Bildung eines Lackfilmes bei verhältnismäßig niedriger Temperatur, im allgemeinen bei Umgebungstemperatur erfolgen muß, so daß eine zusätzliche Vernetzung bei einem Einbrennvorgang nicht erfolgen kann. Wäßrige PUR-Dispersionen vom Stand der Technik bilden im allgemeinen bei Umgebungstemperatur auf Untergründen aus Holz Filme aus, die sich an ihre Herkunft aus Wasser "erinnern" und gegen Wasser und Wasser/Ethanol-Gemische unzureichend beständig sind.

Aufgabe der vorliegenden Erfindung war es, wäßrige PUR-Dispersionen zur Verfügung zu stellen, die Filme mit verbesserten Beständigkeitseigenschaften ausbilden.

Diese Aufgabe konnte gelöst werden durch Verwendung spezieller, Allophanatgruppen enthaltender Polyisocyanate bei der Herstellung von wäßrigen PUR-Dispersionen.

Die Verwendung von Allophanatgruppen enthaltenden Polyisocyanaten für PUR-Dispersionen wird in der Literatur bereits mehrfach erwähnt, in Einzelheiten aber nicht beschrieben. Entsprechende Ausführungsbeispiele sind nicht bekannt geworden.

Gegenstand der Erfindung sind wäßrige Polyurethandispersionen mit verbesserten Beständigkeitseigenschaften bestehend aus
(i) einer Polyisocyanatkomponente
   und
(ii) einer aktiven Wasserstoff enthaltenden Komponente, die mindestens ein polymeres Polyol mit einem mittleren Molekulargewicht im Bereich von 400 bis 6000 und gegebenenfalls ein oder mehrere niedermolekulare Polyole und/oder Polyamine mit einem mittleren Molekulargewicht unter 400 umfaßt, wobei mindestens eines der Polyole oder Polyamine ionische oder potentiell ionische Gruppen enthält,
dadurch gekennzeichnet, daß die Komponente (i) zu mindestens 5 Gew.-% aus einem Diisocyanat der Formel (I) 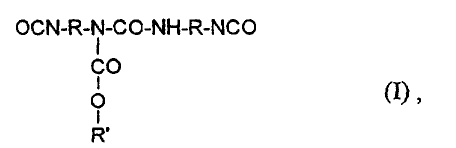 wobei
- R: ein difunktioneller aliphatischer, cycloaliphatischer oder aromatischer Kohlenwasserstoff-Rest mit 4 bis 18 C-Atomen ist, wie er entsteht, wenn aus einem Diisocyanat die beiden NCO-Gruppen entfernt werden und
- R': ein monofunktioneller Kohlenwasserstoff-Rest ist mit 1 bis 18 C-Atomen, die gegebenenfalls durch (ein) Sauerstoffatom(e) unterbrochen sein können,
besteht.

Bevorzugt werden Allophanat-modifizierte Diisocyanate eingesetzt, in denen der Rest R aromatische und (cyclo)aliphatische Gruppierungen enthält und ganz besonders werden Diisocyanate benutzt, wie sie in der DE-A 44 03 233 beschrieben sind. Auch Diisocyanate, wie in der US-A 5 319 053 beschrieben, können vorteilhaft genutzt werden.

Zur Herstellung der erfindungsgemäßen PUR-Dispersionen wird zunächst ein Allophanat-modifiziertes Diisocyanat bereitgestellt. Dazu werden monomere Diisocyanate mit einem Monoalkohol umgesetzt wie unter DE-A 44 03 233 beschrieben. Als Diisocyanate kommen die üblichen bekannten, vor allem die technisch zugänglichen Diisocyanate in Frage. Genannt seien z.B. (cyclo)aliphatische Diisocyanate, Tetramethylendiisocyanat, Hexamethylendiisocyanat, Dodecanmethylendiisocyanat, Cyclohexan-1,3-und -1,4-diisocyanat, 1-Isocyanato-3-isocyanatomethyl-3.5.5-trimethylcyclohexan, 4,4'-Diisocyanatodicyclohexylmethan, Methylcyclohexan-2,4- und 2,6-Diisocyanat.

Auch aromatische Diisocyanate kommen in Frage wie 2,4- und 2,6-Diisocyanatotoluol, 1,5-Diisocyanatonaphthalin und 4,2'-Diisocyanatodiphenylmethan und besonders bevorzugt 4,4'-Diisocyanatodiphenylmethan. Die genannten Diisocyanate können auch als beliebige Gemische eingesetzt werden.

Die weiteren Bestandteile, die zum Aufbau der erfindungsgemäßen PUR-Dispersionen benötigt werden sind bekannt und in der Literatur häufig beschrieben. Es handelt sich dabei um
a) polymere Polyole mit mittleren Molgewichten von 400 bis 6000,
   und um
b) Polyole, Aminopolyole oder Polyamine mit einem Molgewicht unter 400, wobei wenigst eines dieser Polyole bzw. Polyamine eine ionische Gruppe enthält oder zur Ausbildung einer ionischen Gruppe befähigt sein sollte.

Diese ionischen Gruppen können kationisch sein z.B. 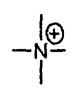 oder anionisch z.B. -SO₃^{⊖} oder vorzugsweise -COO^{⊖}.

Der Einbau von Verbindungen dieser Produktklasse mit z.B. freien Carboxylgruppen oder tert. Aminogruppen in das Polyurethan bedeutet, daß diese Gruppierungen durch Neutralisation oder Quarternierung in ionische Gruppen überführt werden können, d.h. sie sind zur Ausbildung einer ionischen Gruppe befähigt.

Die polymeren Polyole in dem Molgewichtsbereich von 400 bis 6000 sind die üblichen wie sie für Polyurethane bereits seit langem eingesetzt mit einer OH-Funktionalität von mindestens 1,8 bis ca. 4 wie zum Beispiel Polyester, Polyesteramide, Polyether, Polythioether, Polycarbonate, Polyacetale, Polyolefine und Polysiloxane. Bevorzugt verwendet werden Polyole in einem Molgewichtsbereich von 600 bis 2500 mit einer OH-Funktionalität von 2 bis 3.

Polyole, Aminopolyole oder Polyamine mit einem Molgewicht unter 400, die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, Butandiol-1,4, Cyclohexandimethanol, Trimethylolpropan, Glycerin sowie Ethylendiamin, 1,4-Diaminobutan, Isophorondiamin und 4,4'-Diaminodicyclohexylmethan.

Niedermolekulare Polyole, die zur Ausbildung einer ionischen Gruppe befähigt sind, sind z.B. Dimethylolpropionsäure und N-Methyl-diethanolamin.

Neben Polyolen bzw. Polyaminen können auch Polyoxialkylenether die pro Molekül eine OH-Gruppe tragen und z.B. aus einem Alkohol und aus Ethylenoxid/Propylenoxid bestehen mit einem Molgewicht von 250 bis etwa 3000 in das Polyurethan eingebaut werden. Es ist bekannt, daß diese Substanzen Hydrophilieträger sind und die Dispergierung des PUR in Wasser verbessern.

Die Herstellung der wäßrigen PUR-Dispersionen erfolgt in der bekannten üblichen Art: Aus einem monomeren Diisocyanat und einem Monoalkohol stellt man zunächst ein urethanisiertes Isocyanat her. Nach Zugabe eines Katalysators wird die Reaktion fortgesetzt und die Urethangruppen in Allophanatgruppen überführt. Man erhält so - wie in der DE-A 4 403 233 ausführlich beschrieben - ein Allophanatgruppen enthaltendes Diisocyanat, das in überschüssigem monomeren Diisocyanat gelöst ist und in Form dieser Lösung auch zum Einsatz kommt.

In einem 2. Reaktionschritt läßt man das Gemisch aus Allophanatgruppen enthaltendem Diisocyanat und monomeren Diisocyanat mit polymerem Polyol und mit niedermolekularen Kettenverlängerern zu einem Polyurethan ausreagieren, wobei gegebenenfalls und vorteilhaft ein Lösungsmittel mitverwendet wird, das später gegebenenfalls wieder abgetrennt werden kann.

In einem 3. Schritt werden anschließend zur Neutralisation befähigte Gruppen versalzen und mit Wasser die Dispersion erzeugt. Eventuell noch vorhandene restliche NCO-Gruppen reagieren dabei ab. Bei Mitverwendung eines leichtsiedenden Lösemittels kann dieses durch Destillation wieder abgetrennt und zurückgewonnen werden.

Je nach Neutralisationsgrad kann die Dispersion sehr feinteilig eingestellt werden, so daß sie praktisch das Aussehen einer Lösung hat, aber auch sehr grobteilige Einstellungen sind möglich, die ebenfalls ausreichend stabil sind. Auch der Feststoffgehalt kann in weiten Grenzen von z.B. 20 - 50 Gew.-% variiert werden.

Die erfindungsgemäßen PUR-Dispersionen sind über eine lange Zeit ohne Veränderung der Eigenschaften beständig. Sie können vorteilhaft als Lack- und Beschichtungsbindemittel verwendet werden für die Substrate Holz, Metall, Glas, (gegebenenfalls geschäumten) Kunststoff, Leder, Papier und Textil. Sie können für diese Anwendungen mit Lösemitteln, Pigmenten, Farbstoffen, Emulgatoren, Stabilisatoren, UV-Absorbern, Flammschutzmitteln, Verlaufsmitteln und anderen bekannten Hilfsmitteln kombiniert werden.

Sie können auch als Klebstoffe eingesetzt werden zum Verkleben von Polyestermaterialien, Leder, Polyurethan oder auch PVC und Polypropylen. Der Auftrag der erfindungsgemäßen PUR-Dispersionen erfolgt durch Spritzen, Sprühen, Streichen, Tauchen oder ein entsprechendes Lackier- oder Beschichtungsverfahren gegebenenfalls auch über ein indirektes Transferverfahren.

Die bevorzugte Anwendung der erfindungsgemäßen PUR-Dispersionen ist die Lackierung von Holz und besonders von Parkettböden.

Die erfindungsgemäßen Dispersionen zeigen hierbei deutliche Vorteile vor allem in der Beständigkeit gegenüber chemischen Reagentien nicht nur im Vergleich mit PUR-Dispersionen vom Stand der Technik sondern auch gegenüber wäßrigen Bindemitteln auf anderen chemischer Basis. Ein weiterer Vorteil ist die Möglichkeit die erfindungsgemäßen PUR-Dispersionen ohne jedes flüchtige Lösemittel anwenden zu können.

### Beispiele

### Beispiel 1 (Herstellung einer typischen erfindungsgemäßen PUR-Dispersion)

Teile-Angaben sind Gew.-Teile
%-Angaben sind Gew.-%

### 1) Einsatzstoffe

| | | |
|---|---|---|
| 450 | Teile | 4,4'-Diphenylmethandiisocyanat (MDI) |
| 44,4 | Teile | n-Butanol |
| 0,025 | Teile | Zinkacetylacetonat (Katalysator) |
| 0,05 | Teile | Isophthalylchlorid (Abstopper) |
| 420 | Teile | eines Hydroxylpolyesters aus Adipinsäure und Hexan- |
| | | diol-1,6 mit dem mittleren Molgewicht von 840 |
| 5,9 | Teile | Hexandiol-1,6 |
| 60,3 | Teile | Dimethylolpropionsäure (DMPS) |
| 23,6 | Teile | 27 %ige wäßrige NH₃-Lösung |
| 2288 | Teile | Aceton |
| 1447 | Teile | Wasser |

### 2) Durchführung

Diisocyanat und Katalysator werden vermischt und bei 70°C unter N2 n-Butanol zudosiert. Während der exothermen Reaktion steigt die Temperatur auf 100°C an. Nach ca. 2 Stunden bei dieser Temperatur wird bei einem NCO-Gehalt von 20,4 % der Katalysator durch Zugabe des Abstoppers unwirksam gemacht.

Das entstandene Allophanatgruppen enthaltende Diisocyanat wird mit einer Teilmenge des Acetons (109 Teile) gelöst und Hydroxylpolyester sowie Hexandiol-1,6 eindosiert. Man erhitzt 1 Stunde auf 80°C unter Rühren, gibt dann eine weitere Teilmenge Aceton (311 Teile) und dosiert die DMPS ein.

Nach weiteren 5 Stunden Rühren bei 60°C wird mit einer weiteren Teilmenge Aceton (234 Teile) verdünnt und noch 1 Stunde bei 60°C gehalten. Der NCO-Gehalt der Lösung beträgt dann unter 1 %. Die Lösung wird mit der restlichen Menge Aceton und 109 Teilen Wasser versetzt und noch 3 Stunden bei 50°C gehalten. Danach ist kein freies NCO mehr nachzuweisen.

Nun fügt man die NH₃-Lösung und die Restmenge Wasser innerhalb von ca. 45 Minuten zu. Man hält noch 4 Stunden bei 50°C und destilliert dann das Aceton unter vermindertem Druck ab.

Man erhält eine 40 %ige wäßrige Dispersion, die leicht getrübt aber in dünner Schicht fast durchsichtig aussieht.

Ebenso wie in Beispiel 1 beschrieben werden die PUR-Dispersionen folgender Zusammensetzung hergestellt:

### Beispiel 2

| | | |
|---|---|---|
| 450 | Teile | 4,4'-Diphenylmethandiisocyanat |
| 124,2 | Teile | Dodecanol |
| 0,025 | Teile | Katalysator wie in Beispiel 1 |
| 0,05 | Teile | Abstopper wie in Beispiel 1 |
| 420 | Teile | Polyester wie in Beispiel 1 |
| 5,9 | Teile | Hexandiol-1,6 |
| 60,3 | Teile | DMPS |
| 23,6 | Teile | NH₃-Lösung wie in Beispiel 1 |
| 2529 | Teile | Aceton |
| 1626 | Teile | Wasser |

Man erhält eine 40 %ige PUR-Dispersion in Wasser, die in der Durchsicht blaubräunlich aussieht. Sie hat im Fordbecher, Düse 4 eine Auslaufzeit von 20 sek.

### Beispiel 3 (erfindungsgemäß)

| | | |
|---|---|---|
| 450 | Teile | MDI |
| 44,4 | Teile | n-Butanol |
| 0,025 | Teile | Katalysator wie in Beispiel 1 |
| 0,05 | Teile | Abstopper wie in Beispiel 1 |
| 350 | Teile | eines Esterdiols aus Hexandiol-1.6 und ε-Caprolacton mit dem mittleren Molgewicht 650 |
| 5,9 | Teile | Hexandiol-1,6 |
| 60,3 | Teile | DMPS |
| 23,6 | Teile | NH₃-Lösung wie in Beispiel 1 |
| 2218 | Teile | Aceton |
| 1426 | Teile | Wasser |

Es entsteht eine 40 %ige PUR-Dispersion in Wasser, die in dünner Schicht bläulich schimmert. Die Dispersion ist dünnflüssig und leicht zu handhaben.

### Beispiel 4 (Vergleichsversuch)

| | | |
|---|---|---|
| 300 | Teile | MDI |
| 420 | Teile | Polyesterdiol aus Beispiel 1 |
| 5,9 | Teile | Hexandiol-1,6 |
| 60,3 | Teile | DMPS |
| 23,6 | Teile | 27 %ige NH₃-Lösung wie in Beispiel 1 |
| 1834 | Teile | Aceton |
| 1179 | Teile | Wasser |

Es entsteht eine leicht pastöse getrübte PUR-Dispersion 40 %ig in Wasser mit weißem Aussehen. Sie zeigt ein leichtes rheopexes Verhalten.

Alle PUR-Dispersionen der Beispiele 1 bis 3 sind ebenso wie das Vergleichsbeispiel 4 filmbildend und zeigen hervorragende mechanische und Beständigkeitseigenschaften. Entscheidend ist die Beständigkeit gegen Wasser und Wasser/Ethanol-Gemische. Diese Eigenschaft wurde nach der folgenden Methode geprüft und mit dem Vergleichsbeispiel 4 verglichen.

### Beurteilung der Wasser- und Alkoholbeständigkeit

Auftrag: 120 µ naß mit Rakel, 7 d RT trocknen auf Glasplatten
Prüfmethode:
   Mit Wasser bzw. Ethanol (48 %ig in Wasser) getränkte Wattebäusche werden auf die 7 d alten Lackfilme aufgelegt und mit Petrischalen abgedeckt.

Nach Einwirkzeiten von 30 min (Wasser) bzw. 9 min. (Ethanol) erfolgt die Beurteilung, nachdem die nassen Filme mit Haushaltspapier vorsichtig getrocknet wurden.

Erklärung der in der folgenden Tabelle genannten Zahlen:

| | | | |
|---|---|---|---|
| Erweichung | Trübung | Haftverlust | Unterwanderung |
| 0 = unverändert | 0 = unverändert, klar | 0 = unverändert | 0 = unverändert |
| 1 = sehr schwach | 1=Schleier | 1 = schwer abkratzbar | 1 = winzige Bläschen |
| 2 = etwas stärker | 2 = trübe | 2 = abkratzbar | 2 = Bläschen |
| 3 = mit Finger nagel leicht zu beschädigen | 3 = stark trübe | 3 = leicht abkratzbar | 3 = viele Blasen |
| 4 = läßt sich wegwischen | 4 = milchig | 4 = Film löst sich beim Abtupfen | 4 = Flüssigkeitsansammlung |

Die Ergebnisse dieser Ausprüfung sind in der folgenden Tabelle zusammengefaßt:

**Tabelle**

| Prüfung der ca. 45 µ dicken Filme auf Glasplatten nach Einwirkzeit von 30 min mit Wasser (1. Spalte) und 9 min Wasser/Ethanol (2. Spalte) | | | | | | | | |
|---|---|---|---|---|---|---|---|---|
| | Erweichung | | Trübung | | Haftverlust | | Unterwanderung | |
| Beispiel 1 | 0 | 0 | 0 | 0 | 0 | 0 | 0 | 0 |
| Beispiel 2 | 0 | 0 | 0 | 1 | 1 | 1 | 0 | 0 |
| Beispiel 3 | 1 | 1 | 0 | 0 | 2 | 1 | 0 | 0 |
| Beispiel 4 | 3 | 3 | 3 | 4 | 4 | 3 | 1 | 2 |

Das Ergebnis zeigt, daß die Filme aus den erfindungsgemäßen PUR-Dispersionen gegenüber dem Vergleichsversuch deutliche Vorteile besitzen. Durch die Summe ihrer Eigenschaften sind sie für Lackierung und Beschichtung von Holz und Parkett sehr gut geeignet.

## Patentansprüche

1. Wäßrige Polyurethandispersionen mit verbesserten Beständigkeitseigenschaften bestehend aus
(i) einer Polyisocyanatkomponente
und
(ii) einer aktiven Wasserstoff enthaltenden Komponente, die mindestens ein polymeres Polyol mit einem mittleren Molekulargewicht im Bereich von 400 bis 6000 und gegebenenfalls ein oder mehrere niedermolekulare Polyole und/oder Polyamine mit einem mittleren Molekulargewicht unter 400 umfaßt, wobei mindestens eines der Polyole oder Polyamine ionische oder potentiell ionische Gruppen enthält,
dadurch gekennzeichnet, daß die Komponente (i) zu mindestens 5 Gew.-% aus einem Diisocyanat der allgemeinen Formel (I) 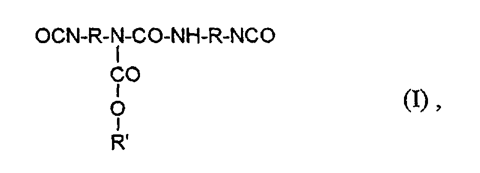 wobei
R ein difunktioneller aliphatischer, cycloaliphatischer oder aromatischer Kohlenwasserstoff-Rest mit 4 bis 18 C-Atomen ist, wie er entsteht, wenn aus einem Diisocyanat die beiden NCO-Gruppen entfernt werden und
R' ein monofunktioneller Kohlenwasserstoff-Rest ist mit 1 bis 18 C-Atomen, die gegebenenfalls durch (ein) Sauerstoffatom(e) unterbrochen sein können,
besteht.

2. Verwendung der PUR-Dispersionen gemäß Anspruch 1 zur Lackierung von Holz.

3. Verwendung nach Anspruch 2 zur Lackierung von Parkettböden.

## Claims

1. Aqueous polyurethane dispersions having improved properties of durability, consisting of
(i) a polyisocyanate component and
(ii) a component which contains active hydrogen and which comprises at least one polymeric polyol with an average molecular weight within the range from 400 to 6000 and optionally one or more low molecular weight polyols and/or polyamines with an average molecular weight less than 400, wherein at least one of the polyols or polyamines contains ionic or potentially ionic groups,
characterised in that at least 5 % by weight of component (i) consists of a diisocyanate of general formula (I) 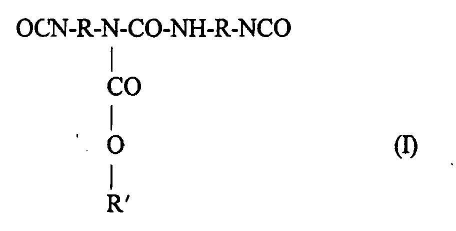 wherein
R is a difunctional aliphatic, cycloaliphatic or aromatic hydrocarbon radical containing 4 to 18 carbon atoms which is formed when the two NCO groups are removed from a diisocyanate, and
R' is a monofunctional hydrocarbon radical containing 1 to 18 C atoms, which may optionally be interrupted by (an) oxygen atom(s).

2. The use of the PUR dispersions according to claim 1 for the coating of wood.

3. A use according to claim 2 for the coating of parquet floors.

## Revendications

1. Dispersions aqueuses de polyuréthanne dont les propriétés de résistance ont été améliorées, constituées par
(i) un composant de polyisocyanate et
(ii) un composant contenant un atome d'hydrogène actif, qui comprend au moins un polyol polymère possédant un poids moléculaire moyen dans le domaine de 400 à 6000 et, le cas échéant, un ou plusieurs polyols et/ou une ou plusieurs polyamines à bas poids moléculaire, dont le poids moléculaire moyen est inférieur à 400, dans lequel au moins un des polyols ou une des polyamines contient des groupes ioniques ou potentiellement ioniques,
caractérisé en ce que le composant (i) est constitué, à concurrence d'au moins 5 % en poids, par un diisocyanate répondant à la formule générale (I) 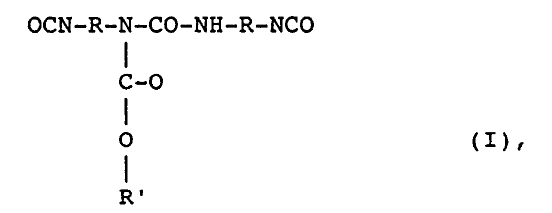 dans laquelle
R représente un radical d'hydrocarbure aliphatique, cycloaliphatique ou aromatique difonctionnel contenant de 4 à 18 atomes de carbone, tel qu'on l'obtient lorsqu'on élimine les deux groupes NCO d'un diisocyanate, et
R' représente un radical d'hydrocarbure monofonctionnel contenant de 1 à 18 atomes de carbone qui peuvent, le cas échéant, être interrompus par un ou plusieurs atomes d'oxygène.

2. Utilisation des dispersions de type PUR selon la revendication 1, pour le vernissage du bois.

3. Utilisation selon la revendication 2, pour le vernissage de revêtements de sols en parquets.
